# NEW EUROPEAN PATENT SPECIFICATION

(11) **EP 1 737 906 B2**
(45) Date of publication and mention of the opposition decision: **14.12.2011**
(45) Mention of the grant of the patent: 27.08.2008
(21) Application number: 04819695.0
(22) Date of filing: 30.11.2004
(51) Int. Cl.: C08K 13/02

(54) **USE OF COMPOSITIONS COMPRISING ISOCYANURATES AND MAGNESIUM (HYDR)OXIDES FOR STABILIZING OF ORGANIC PLASTICS CONTAINING HALOGENS**
VERWENDUNG VON ISOCYANURATE UND MAGNESIUM(HYDR)OXIDE ENTHALTENDEN ZUSAMMENSETZUNGEN ZUR STABILISIERUNG VON HALOGENHALTIGEN ORGANISCHEN KUNSTSTOFFEN
UTILISATION DE COMPOSITIONS COMPRENANT DES ISOCYANURATES ET DES (HYDR)OXYDES DE MAGNESIUM POUR STABILISER DES MATIERES PLASTIQUES ORGANIQUES CONTENANT DES HALOGENES

(30) Priority: 04.12.2003 DE 10356529
(43) Date of publication of application: 03.01.2007
(73) Proprietor: Reagens Deutschland GmbH, 49393 Lohne (DE)
(72) Inventor: DAUTE, Peter, 27616 Beverstedt (DE); WITTE, Hajo, 28213 Bremen (DE)
(74) Representative: Weisgerber, Stefan
(86) International application number: PCT/EP2004/053166
(87) International publication number: WO 2005/054358

(56) References cited:
- EP-A- 0 256 872
- EP-A- 0 838 495
- CH.E.WILKES, J.W. SUMMERS, CH.A.DANIELS: 'PVC Handbook', 2005, CARL HANSER VERLAG, MUNICH

## Description

### Field of the invention

The invention relates to the use of compositions comprising (a) isocyanurates containing hydroxyl groups and (b) magnesium (hydr)oxides for stabilizing organic plastics containing halogens against thermal and/or photochemical degradation.

### State of the art

As it is well known, halogen-containing plastics or moulding materials produced thereof are prone to degradation or decomposition reactions if exposed to thermal stress or coming in contact with high-energy radiation, for example ultraviolet light.

Usually metal-containing stabilizers based on Pb, Ba, Cd, Sn, Ca and Zn are used for stabilizing PVC when being processed. Already in 1940 urea derivatives such as diphenyl thiourea were proposed for stabilizing PVC (see also: Gächter/Müller, "Kunststoff-Additive", Carl Hanser Verlag 1989, p 312). These compounds are usually applied in combination with metal-containing stabilizers as they generally don't give sufficient long-term stabilization if used alone.

### Description of the invention

The problem of the present invention was to provide compositions suitable for the stabilization of organic plastics containing halogens, particularly PVC, against thermal and/or photochemical degradation.

One object of the present invention is the use of compositions comprising (a) isocyanurates containing hydroxyl groups and (b) magnesium (hydr)oxides for stabilizing organic plastics containing halogens against thermal degradation.

### Concerning the compounds (a)

According to the present invention isocyanurates containing hydroxyl groups are applied as compounds (a). There are, strictly speaking, no restrictions concerning the structure of the compounds (a).

Preferably the compounds (a) are represented by the following structure (I) 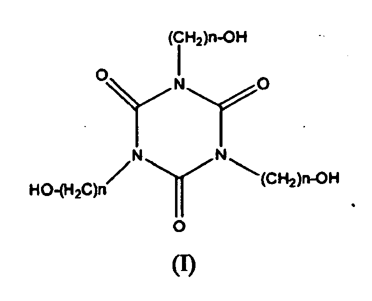 wherein the indices n may be the same or different and represent integers between 0 and 10.

According to the present invention, tris (hydroxyethyl) isocyanurate (THEIC) is preferred most as compound (a).

### Concerning the compounds (b)

Magnesium (hydr)oxides (b) mean magnesium oxide and magnesium hydroxide or mixtures thereof.

Another object of the present invention is the use of **stabilizer compositions** for stabilizing organic plastics containing halogens against thermal and/or photochemical degradation, characterized in that these compositions comprise one or more isocyanurates containing hydroxyl groups and one or more magnesium (hydr)oxides. Concerning the type of said isocyanurates and said magnesium (hydr)oxides and there preferred variants we refer to what has been described above.

For stabilizing organic plastics containing halogens the compositions to be applied according to the present invention are used in an amount of 0.001 to 5 phr, preferably 0.01 to 2 phr and still more preferred 0.01 to 1.0 phr. The amounts of isocyanurates and magnesium (hydr)oxides in the compositions to be applied according to the present invention are in a range of 0.05 to 2 phr, respectively, and preferably in a range of 0.1 to 1.0 phr. The term phr ("parts per hundred resin"), well known to persons skilled in the art, indicates how many parts by weight, based on the 100 parts by weight plastic, of the component are present in the plastic.

The compositions to be applied according to the present invention may be formulated as usual.

In an embodiment of the present invention the compositions to be applied according to the present invention further comprise one or more plastic additives selected from the group of the following compounds: cyano acetyl urea derivatives, dimethyl aminouracil, antistatic agents, zeolites, cationic layered compounds (hydrotalcites), CHAP compounds, katoites, glycidyl compounds, beta-diketones and their salts like calcium acetylacetonate, beta-ketoesters, dihydropyridine and polydihydropyridines, polyols and polyol derivatives, sterically hindered amines (tetraalkyl piperidine compounds), alkali metal alumocarbonates (dawsonites), alkali and earth alkali metal compounds, antioxidants, release agents and/or slip agents, plasticizers, pigments, fillers, phosphites, thiophosphites and thiophosphates, mercaptocarboxylic acid esters, epoxidized fatty acid esters, UV absorbers and photo protection agents, blowing agents, urea, metal soaps, trifluoromethane sulfonates, perchlorates. The plastic additives mentioned above are known to persons skilled in the art and are frequently described in the literature. As an example hereof refer to WO-A-03/004558 of the applicant.

Another object of the present invention are PVC-stabilizing compositions comprising the above-described isocyanurates containing hydroxyl groups (a) and magnesium (hydr)oxides (b).

### Concerning the organic plastics containing halogens

The organic plastics containing halogens that are to be stabilized by the compositions to be applied according to the present invention are particularly chlorine-containing polymers or their regrinds. Examples for said chlorine-containing polymers to be stabilized or their regrinds are: polymers of vinyl chloride, vinyl resins comprising vinyl chloride units in their structure like copolymers of vinyl chloride and vinyl esters of aliphatic acids, vinyl acetate in particular, copolymers of vinyl chloride with esters of the acrylic and methacrylic acid and with acrylonitrile, copolymers of vinyl chloride with diene compounds and unsaturated dicarboxylic acids or their anhydrides, like copolymers of vinyl chloride with diethyl maleate, diethyl fumarate or maleic anhydride, post-chlorinated polymers and copolymers of vinyl chloride, copolymers of vinyl chloride and vinylidene chloride with unsaturated aldehydes, ketones and others like acrolein, crotonaldehyde, vinyl methyl ketone, vinyl methyl ether, vinyl isobutyl ether and the like; polymers of vinylidene chloride and copolymers thereof with vinyl chloride and other polymerisable compounds; polymers of vinyl chloroacetate and dichlorodivinyl ether, chlorinated polymers of vinyl acetate, chlorinated polymeric esters of acrylic acid and alpha-substituted acrylic acid; polymers of chlorinated styrenes, for example dichlorostyrene; chlorinated polymers of ethylene; polymers and post-chlorinated polymers of chlorobutadiene and their copolymers with vinyl chloride; and mixtures of the said polymers among themselves or with other polymerisable compounds.

Furthermore, graft polymers of PVC with EVA, ABS and MBS are comprised. Preferred substrates are also mixtures of the above mentioned homo- and copolymers, particularly vinyl chloride homopolymers, with other thermoplastic and/or elastomeric polymers, particularly blends with ABS, MBS, NBR, SAN, EVA, CPE, MBAS, PMA, PMMA, EPDM and polylactons.

Furthermore, suspension and mass polymers and emulsion polymers are preferred.

Especially preferred as chlorine-containing polymer is polyvinyl chloride, in particular suspension polymer and mass polymer.

In the present invention PVC means also copolymers or graft polymers of PVC with polymerisable compounds like acrylonitrile, vinyl acetate or ABS, wherein these may be suspension, mass or emulsion polymers. PVC-homopolymer is preferred, also in combination with polyacrylates.

Furthermore, regrinds of chlorine-containing polymers can be used, wherein this means the above described polymers having sustained damages caused by processing, use or storage. Especially preferred is PVC-regrind. The regrind may contain small amounts of impurities like, e.g., paper, pigments, adhesives, which are often difficult to remove. These impurities can also result from the contact with a variety of compounds during use and workup like fuel residues, pigment coating residues, traces of metals and initiator residues.

### Examples

About the used components
· Vinnolit H2264Z = PVC (Vinnolit)
· Hydrocarb 95 T = chalk (Omya)
· Alcamizer P93 = hydrotalcite (Mitsui)
· calcium stearate = Faci
· zinc stearate = Faci
· Kronos 2220 = titane dioxide (Kronos)
· THEIC = BASF
· magnesium hydroxide = Fluka

### Examples 1 to 4:

According to the following formulations B1 to B4 PVC-stabilizing mixtures were produced. Example B4 is according to the present invention, examples B1 to B3 serve as comparative examples. The amounts indicated in the formulations are given in phr.

The term phr ("parts per hundred resin"), well known to persons skilled in the art, indicates how many parts by weight, based on the 100 parts by weight plastic, of the component are present in the plastic.

| example: | B1 | B2 | B3 | B4 |
|---|---|---|---|---|
| Vinnolit H2264Z | 100 | 100 | 100 | 100 |
| Hydrocarb 95 T | 3 | 3 | 3 | 3 |
| Alcamizer P93 | 0.4 | 0.4 | 0.4 | 0.4 |
| calcium stearate | 0.2 | 0.2 | 0.2 | 0.2 |
| zinc stearate | 0.2 | 0.2 | 0.2 | 0.2 |
| Kronoss 2220 | 3 | 3 | 3 | 3 |
| Irganox 1076 | 0.1 | 0.1 | 0.1 | 0.1 |
| THEIC | - | - | 0.2 | 0.2 |
| magnesium hydroxide | - | 0.2 | - | 0.2 |

The test formulations were processed as follows:

Rolled sheets were manufactured from the respective formulations. The manufacturing of the rolled sheets were carried out by mixing the PVC powder and the said additives together and by homogenizing and plasticizing the mixture on a laboratory rolling mill for 5 minutes at 180 °C. The thermal stability of the rolled sheets was determined according to the Congo-red method at 200 °C.

The stability test according to the congo red method [according to the European standard EN 60811-3-2:1995, Abs. 9] works as follows: small samples (50 ± 5 mg) of the respective rolled sheets were taken and heated in the respective vials up to 200 °C (± 0.5 °C) in a metal block. Into the upper end of the vials universal indicator paper was introduced. The time until the colour of the indicator paper changed into red was determined in minutes.

The results of measurements according to the congo red method were as follows:

| Example | thermal stability [min] |
|---|---|
| B1 | 12 |
| B2 | 13 |
| B3 | 13 |
| B4 | 17 |

These data show clearly that the measured thermal stability of the formulation B4 according to the present invention gave better (higher) values than of the formulations B1 to B3 not according to the present invention.

## Claims

1. Use of magnesium (hydr)oxides for improving the protection against thermal degradation, said protection being brought about by stabilizers for organic plastics comprising halogen, the said stabilizers comprising isocyanurates containing hydroxyl groups and wherein magnesium (hydr)oxides are selected from magnesium hydroxide, magnesium oxide and mixtures thereof

## Patentansprüche

1. Verwendung von Magnesium(hydr)oxiden zum Verbessern des Schutzes vor thermischer Zersetzung, wobei der Schutz durch Stabilisierungsmittel für Halogen enthaltende organische Kunststoffe bewirkt wird, wobei die Stabilisierungsmittel Hydroxylgruppen enthaltende Isocyanurate enthalten, und, wobei die Magnesium(hydr)oxide aus Magnesiumhydroxid, Magnesiumoxid und Mischungen hiervon ausgewählt werden.

## Revendications

1. Utilisation d'hydr)oxydes de magnésium pour renforcer la protection vis-à-vis d'une dégradation thermique entraînée par des stabilisants de matières plastiques organiques comprenant un halogène, lesdits stabilisants comprenant des isocyanurates contenant des groupes hydroxyle et selon laquelle les (hydr) oxydes de magnésium sont choisis parmi l'hydroxyde de magnésium, l'oxyde de magnésium et leurs mélanges.
